# EUROPEAN PATENT SPECIFICATION

(11) **EP 3 069 927 B1**
(45) Date of publication and mention of the grant of the patent: **26.12.2018**
(21) Application number: 15159344.9
(22) Date of filing: 17.03.2015
(51) Int. Cl.: B60P 1/54

(54) **AUXILIARY FRAME FOR MOUNTING A CRANE ON A CHASSIS**
HILFSRAHMEN ZUR MONTAGE EINES KRANS AUF EINEM FAHRGESTELL
CADRE AUXILIAIRE POUR LE MONTAGE D'UNE GRUE SUR UN CHÂSSIS

(43) Date of publication of application: 21.09.2016
(73) Proprietor: Werkhuizen Jacobs BVBA, 3560 Lummen (BE)
(72) Inventor: Jacobs, Patrick, B-3560 Lummen (BE)
(74) Representative: IPLodge bvba

(56) References cited:
- BE-A3- 1 016 244
- DE-A1-102009 047 458
- DE-U1- 20 020 452
- US-A- 3 622 171
- US-A- 3 650 421
- US-A1- 2004 195 196

## Description

### Technical field of the invention

The present invention concerns an auxiliary frame, a motor vehicle comprising the auxiliary frame and the use of the auxiliary frame for the mounting of a crane.

### Background of the invention

A first task of an auxiliary frame for mounting a crane on a chassis is to make sure that the chassis is sufficiently reinforced by the auxiliary frame so as to be able to absorb the load of the crane. Such auxiliary frames are known in the prior art, but they have numerous disadvantages in particular they have to be individually designed and manufactured for a given type of vehicle, which is very time-consuming and labour-intensive.

US 3,622,171 discloses in a vehicle frame having a plurality of longitudinal plates forming two hollow longitudinal girders spaced transversely from each other and connected to each other by a web body and by transverse reinforcements, the frame having an inverted substantially U-shaped cross section, the improvement wherein said web body is hollow between said two hollow longitudinal girders, and further comprising a plurality of oblique plates rigidly connected to each other and connecting a lower longitudinal plate of the web body with an upper longitudinal plate of the web body, said oblique plates being located in the hollow web body in the area where the greatest force of a load will be applied to the frame and defining a polygonal space having an upwardly diverging inverted truncated pyramidal configuration.

EP 1832498A discloses a transport vehicle chassis that is made up of a metallic structure that supports an upper container or body, said structure being formed by a pair of long spars separated from each other, between which there are a plurality of crossbars located transversally and in the same horizontal plane of the spars, and characterised in that the fixing between the spars and the plurality of crossbars is made by means of bolts, the inner face of each one of the long spars having been fitted with some tabs which are an integral part of the spars and bent at a right angle to the spars and which have openings by means of which the bolt elements are fitted, thus allowing the coupling of the crossbars and the long spars and the crossbars are made from a galvanised sheet material.

EP 2085295A discloses an auxiliary frame for mounting a crane on the chassis of a vehicle, which auxiliary frame is composed of at least two longitudinal struts and at least two transverse elements which can be displaced in the longitudinal direction of the longitudinal struts in a discontinuous or gradual manner by means of bolts which are provided through holes in the longitudinal struts, which holes are situated at a distance (D) from one another in the longitudinal direction, characterised in that the transverse elements are provided with grooves extending in the longitudinal direction which are designed for fixing the crane by means of bolts which are provided through these grooves and whereby the distance (D) between the holes in the longitudinal struts on the one hand and the length (L) of the grooves on the other hand is selected such that the crane can be fixed in any location whatsoever in the longitudinal direction of a longitudinal strut.

DE 102009047458A1 discloses a mounting arrangement for a motor vehicle, in particular a dump truck or flatbed truck, wherein the mounting arrangement is adapted for the attachment of a loading crane to the truck and by means of an auxiliary frame is attachable or attached to a vehicle frame of the truck, wherein the mounting arrangement comprises at least two crane connecting means each connected with the respective longitudinal beams of the auxiliary frame and at least one of the longitudinal beam connected in the transverse direction with transverse supports, characterized in that the crane connecting means are fastenable or fastened detachably, in particular screwed, along the longitudinal beam at selectable positions.

US 2004/0165977A discloses in a service vehicle including a chassis having two spaced frame members extending longitudinally of the vehicle, one on each side of the longitudinal centerline of the vehicle; ground engaging means on said chassis whereby the vehicle may traverse the underlying terrain; a generally horizontal deck mounted on said chassis for receiving and carrying a load to be transported and extending to each side of said centerline; and a loading/unloading apparatus mounted on said vehicle at a location to one side of said centerline and operable to locate on or remove from a load on said deck; the improvement wherein: said deck includes a generally horizontal plate defining an upper deck surface and at least two spaced elongated box beams supporting said plate and extending longitudinally of said centerline generally parallel and in proximity to a respective one of said frame members and secured thereto, and a plurality of cross braces secured to and extending between said box beams below said plate at spaced locations along said centerline, said loading/unloading apparatus being secured to said deck on one side of said centerline at a location on the opposite side of one of said box beams from said centerline. US 2004/0165977A discloses a deck including a generally horizontal plate defining an upper deck surface with at least two spaced elongated box beams supporting said plate, these elongated box beams being secured to two spaced frame members of a chassis extending longitudinally of the vehicle. It fails to disclose, suggest or hint at replacing this arrangement with a single central box section longitudinally mountable on a chassis having two spaced girders extending longitudinally. Moreover, it fails to disclose, suggest or hint at this central box section being provided with universal coupling plates for any mountable crane or an auxiliary frame comprising a central box section, two side sections and a plurality of transverse members in which the transverse members extend from one side section through the central box section to the other side section.

BE 1 016 244 A3 also discloses an auxiliary frame for mounting a crane on a vehicle.

### Summary of the invention

It is an object of the present invention to provide an auxiliary frame for the mounting of cranes and, in particular, the mounting of cranes on motor vehicles or wagons, in particular railway wagons; mounting thereof on the longitudinal girders of any chassis; and the use thereof for the mounting of a crane.

The auxiliary frame of the present invention has the advantage of increased torsional rigidity over prior art auxiliary frames without a substantial weight penalty.

The auxiliary frame of the present invention enables lower flooring to be realized than with prior art auxiliary frames, which has the dual advantages of lowering the centre of gravity of the vehicle and of making loading and unloading easier.

Furthermore, since the auxiliary frame of the present invention enables lower flooring to be realized than with prior art auxiliary frames, taller auxiliary frames and hence more rigid frames can be used without increasing the height of the flooring.

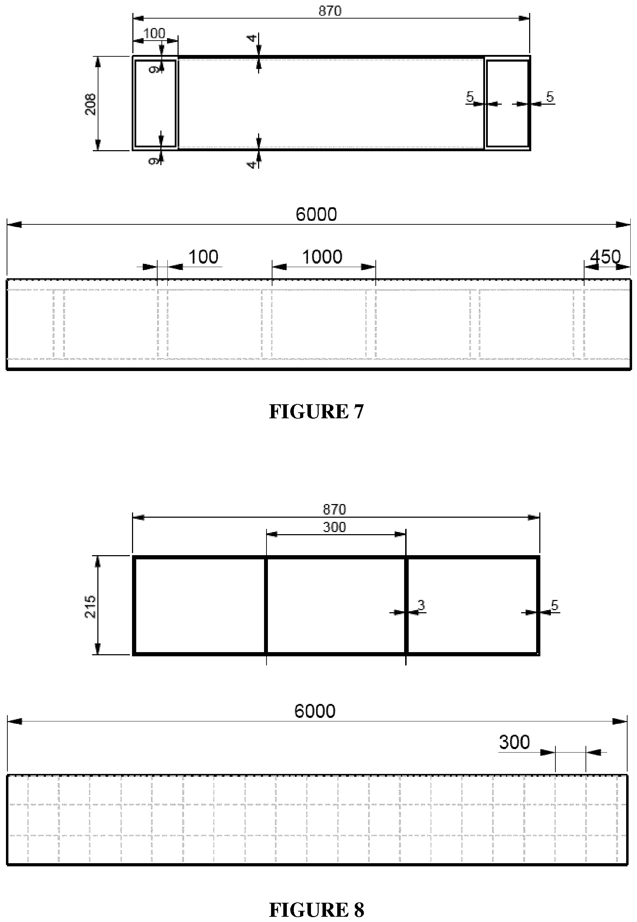

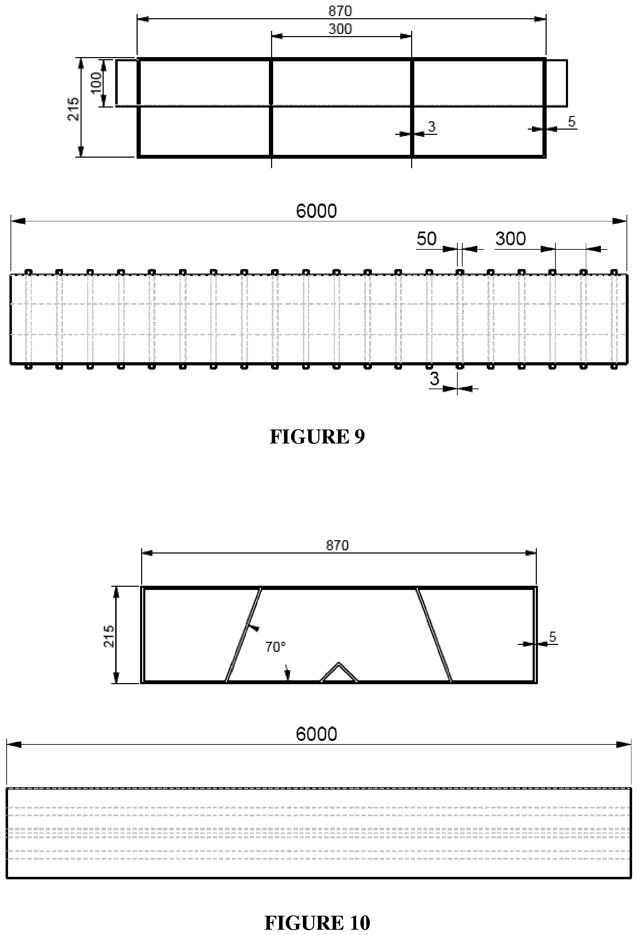

The auxiliary frame of the present invention has the advantage of not requiring additional transverse elements situated above the auxiliary frame for supporting the loading bay. For example in the case of the prior art configurations shown in Figures 7 and 10, flooring can only be realized either by mounting transverse members on top of the auxiliary frame with the flooring on top, or to weld a floor section to each longitudinal side of the auxiliary frame.

The auxiliary frames of the present invention simplify the mounting of auxiliary frames on vehicles, since the mounting of the transverse members and the flooring thereon can be the final step in the installation process.

Furthermore, the mounting of the auxiliary frames of the present invention require less skilled personnel, since mounting simply requires the use of bolts and does not require welding.

Finally, since the auxiliary frames of the present invention can be mounted using bolts, this has the advantage of enabling the parts to be better treated against rust e.g. by galvanization.

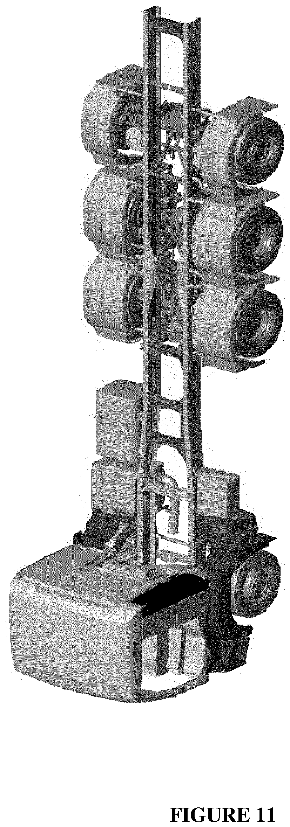

A first aspect of the present invention is realized by an auxiliary frame for a motor vehicle having a chassis with two spaced girders extending longitudinally with (such as shown in Fig. 11) or without at least one offset, said auxiliary frame comprising a central box section [1], two side sections [2, 2'] and a plurality of transverse members [3], said central box section [1] comprising four longitudinal sides at least two of which being substantially parallel to one another and having a cross-section with substantially invariable angles perpendicular to the longitudinal axis of said central box section [1], said central box section [1] comprising at least one box element affixed to one another if at least two box elements and at least two longitudinal plates, two of which are sides walls of said box element, with said at least two longitudinal plates having dedicated holes for said transverse members [3]; said plurality of transverse members [3] passing through said holes and being substantially perpendicular to said longitudinal axis; and each of said side sections [2, 2'] being affixed to one end of said plurality of transverse members [3], wherein said central box member is longitudinally mountable on said chassis with fixation means and is provided with coupling plates for a mountable crane.

A second aspect of the present invention is realized by a motor vehicle comprising the above-mentioned auxiliary frame.

A third aspect of the present invention, is realized by a method of affixing the above-mentioned auxiliary frame to an entity having longitudinal girders, said method comprising the step of fitting fixation means to said longitudinal girders to accommodate said central box section [1]; and affixing said central box section [1] to said fixation means affixed to said longitudinal girders.

A fourth aspect of the present invention is realized by the use of the above-mentioned auxiliary frame for the mounting of a crane.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices.

The above and other characteristics, features and advantages of the present invention will become apparent from the following detailed description. This description is given for the sake of example only, without limiting the scope of the invention. The reference figures quoted below refer to the attached drawings.

### Brief description of the drawings

Figure 1 shows an auxiliary frame, according to the present invention, with the central box section [1] consisting of three sections permanently affixed to one another, and one side section visible [2'], the side section [2'] being adapted to accommodate the wheels of a motor vehicle, with flooring [4 and 4'] either side of the central box section [1] and two end elements [5].
Figure 2 shows the auxiliary frame of Figure 1 mounted on a motor vehicle.
Figure 3 shows a central box section [1] with dedicated holes in the longitudinal plates thereof, the transverse elements [3] and the side sections [2, 2'] adapted to accommodate the wheels of a motor vehicle and a plurality of transverse members [3] with flooring [4, 4'] above the transverse members [3] either side of the central box section [1] and four end elements [5] .
Figure 4 shows a section which can be permanently affixed to one another to produce a box element, according to the present invention, and which lugs [6] for affixing the transverse members [3] to the box element are also shown.
Figure 5 shows a central box section [1], according to the present invention, in which the rectangular cross-section has lengths which vary along the longitudinal axis thereof and also shows one end element [5] affixed to each of the side sections [2, 2'].
Figure 6 is a close-up of Figure 5 showing the variation in the vertical dimension of the box element along the longitudinal axis.
Figure 7 shows configuration 1.1 with the upper figure showing the transverse profile and the lower figure the longitudinal profile, as used in the prior art.
Figure 8 shows configuration 1.2 with the upper figure showing the transverse profile and the lower figure the longitudinal profile.
Figure 9 shows configuration 1.3 with the upper figure showing the transverse profile and the lower figure the longitudinal profile.
Figure 10 shows configuration 1.4 with the upper figure showing the transverse profile and the lower figure the longitudinal profile, as used in the prior art.
Figure 11 shows a motor vehicle with girders consisting of two joined parallel sections, one section being offset with respect to the other.

### Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B. The meaning of the word "comprising" encompasses all the specifically mentioned features as well as optional, additional, unspecified ones, whereas the term "consisting of" only includes those features as specified in the claim. Therefore, "comprising" includes the term "consisting of", so that the amendment from the former into the latter term does not extend beyond the content of the application as originally filed.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

### Definitions

The term box section, as used in disclosing the present invention, means having four longitudinal sides, but not necessarily having end plates.

The term box element, as used in disclosing the present invention, means having four longitudinal sides, but not necessarily having end plates.

The term "affixing", as used in disclosing the present invention, means any means by which the object being affixed can be permanently or reversibly attached to another object and includes screwing, bolting, welding, sintering, riveting and gluing.

The term "dedicated hole", as used in disclosing the present invention, means a hole of a size to provide for passage of transverse elements.

The term "lug", as used in disclosing the present invention, means a projection which can be used for affixing purposes.

The term "substantially parallel to one another", as used in disclosing the present invention, means the top plate being parallel to the bottom plate for at least 90% of its length, with its being parallel to the bottom plate for at least 95% of its length being preferred.

The term "substantially perpendicular", as used in disclosing the present invention, means an angle between 80 and 100°, preferably between 85 and 95°.

The term "substantially equally spaced", as used in disclosing the present invention means within ± 20%, with within ±15% being preferred and within ±10% being particularly preferred.

The term "substantially rectangular, as used in disclosing the present invention, means having angles between 85 and 95°.

The term "offset", as used in disclosing the present invention in respect of the spaced longitudinally extending girders of a chassis, means that a girder has two joined parallel sections, one section being offset with respect to the other, as shown in Figure 11.

The term "fixation plate", as used in disclosing the present invention, is the means of attachment of the central box section [1] of the auxiliary frame to the chassis of a motor vehicle e.g. a console. These fixation plates vary according to the chassis on which the central box section of the auxiliary frame of the present invention has to be mounted.

### Auxiliary frame for a motor vehicle

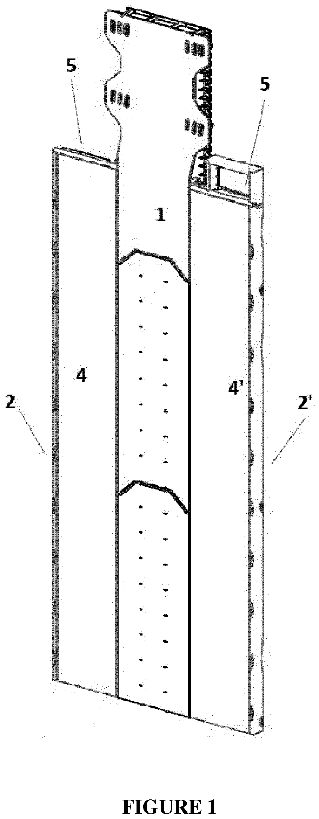

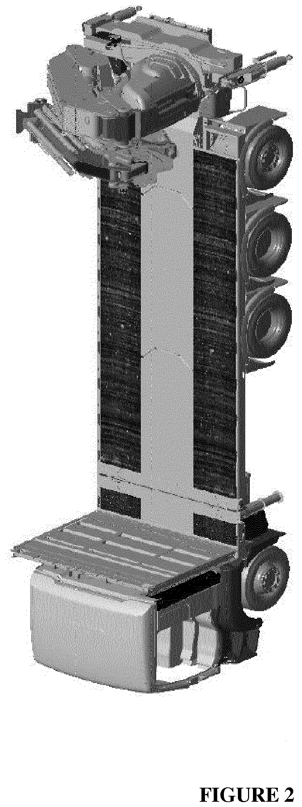

Figure 1 shows an auxiliary frame, according to the present invention, with the central box section [1] and side sections [2, 2'] with one side section [2'] visible, the side section [2'] being adapted to accommodate the wheels of a motor vehicle, with flooring [4, 4'] either side of the central box section [1] and Figure 2 shows this auxiliary frame mounted on a motor vehicle.

The at least one box element may have no transverse elements or have one or more transverse elements. If there are two transverse elements, two may be end plates of the at least one box element.

According to a preferred embodiment of the first aspect of the present invention, each of said at least one box element comprises one or more transverse plates.

According to another preferred embodiment of the first aspect of the present invention, each of said at least one box element comprises transverse plates, with two of said at least two transverse plates being preferably end plates of said box element.

According to another preferred embodiment of the first aspect of the present invention, the at least one box element comprises a bottom plate, two side walls and a top plate permanently affixed together. If the affixing process is welding, the welding may be performed manually or using robot-welders.

According to another preferred embodiment of the first aspect of the present invention, the at least one box element comprises a stretched U-profile with longitudinal sides and a flat bottom, said U-profile being closed at each end by said end-plates. The sides of the U-profile may also be bent over at each top of the U to form lips parallel to the bottom of said U-profile to which a plate extending over or under the whole U-profile is permanently affixed. If the affixing process is welding, the welding may be performed manually or using robot-welders.

According to another preferred embodiment of the first aspect of the present invention, the dedicated holes in the at least two longitudinal plates are dimensioned to accommodate the transverse members [3] and are spaced such that the rigidity of the central box section [1] is substantially unaffected by the dedicated holes. The dedicated holes may be present either before or after the affixing process in which the central box section [1] is produced and may be produced by any known process, for example conventional boring or laser cutting.

According to another preferred embodiment of the first aspect of the present invention, at least one of said side sections [2, 2'] is provided with flooring [4, 4'] above and supported by said plurality of transverse members [3], said flooring [4, 4'] being preferably selected from the group consisting of wood, metal, plastic and rubber. The floor can be loose elements in any mechanically rigid material, for example wood, steel, aluminium, plastic, rubber etc. or a steel plate and may be affixed to the transverse members [3]. Seals may be required between such flooring and the auxiliary frame. At least part of the top of the central box section [1] and the flooring [4, 4'] above and supported by the transverse members [3] may provide the bottom of a loading bay for a motor vehicle.

### Central box section

The central box section, which comprises four longitudinal sides at least two of which being substantially parallel to one another, may be symmetrical or asymmetrical and may have a cross-section with a trapezoidal or substantially rectangular shape.

According to a preferred embodiment of the first aspect according to the present invention, only two of said four longitudinal sides are substantially parallel to one another and said cross-section is trapezoidal in shape, with angles preferably between 45° and 135° and particularly preferably between 60° and 120°.

According to a preferred embodiment of the first aspect according to the present invention, only two of said four longitudinal sides are substantially parallel to one another, said cross-section is trapezoidal in shape, said longitudinal sides which are not substantially parallel to one another vary in length along said longitudinal axis and said longitudinal sides not substantially parallel to one another do not vary in length along said longitudinal axis.

According to a preferred embodiment of the first aspect according to the present invention, only two of said four longitudinal sides are substantially parallel to one another, said cross-section is trapezoidal in shape, said longitudinal sides which are not substantially parallel to one another vary in length along said longitudinal axis and said longitudinal sides which are substantially parallel to one another do not vary in length along said longitudinal axis.

According to a preferred embodiment of the first aspect according to the present invention, only two of said four longitudinal sides are substantially parallel to one another, said cross-section is trapezoidal in shape, said longitudinal sides which are substantially parallel to one another vary in length along said longitudinal axis and said longitudinal sides that are not substantially parallel to one another also vary in length along said longitudinal axis.

According to a preferred embodiment of the first aspect according to the present invention, said cross-section is substantially rectangular. said rectangular cross-section having four sides which optionally vary in length along said longitudinal axis, said four sides having a mean side length, two of said four sides with equal length, the shorter sides, have a length shorter than the mean side length of the rectangular cross-section, and two of said four sides with equal length, the longer sides, have lengths longer than the mean side length of the rectangular cross-section.

According to another preferred embodiment of the first aspect according to the present invention, said at least one box element is symmetrical with respect to the longitudinal axis of said central box section.

According to another preferred embodiment of the first aspect according to the present invention, said at least one box element is asymmetrical with respect to the longitudinal axis of said central box section.

According to another preferred embodiment of the first aspect according to the present invention, said cross-section is rectangular, said rectangular cross-section having four sides the shorter sides of which vary in length and the longer sides of which do not vary in length.

According to another preferred embodiment of the first aspect according to the present invention, said cross-section is rectangular, said rectangular cross-section having four sides the longer sides of which vary in length and the shorter sides of which do not vary in length.

According to another preferred embodiment of the first aspect according to the present invention, said cross-section is rectangular, said rectangular cross-section having four sides both the shorter sides of which and the longer sides of which vary in length.

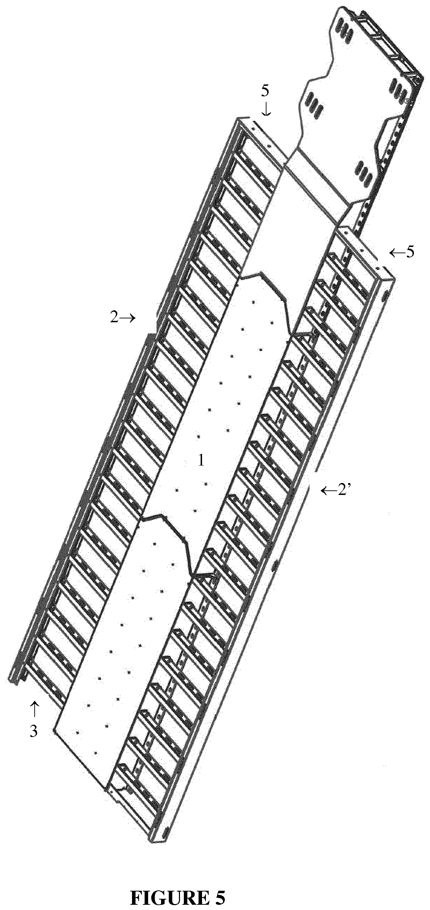

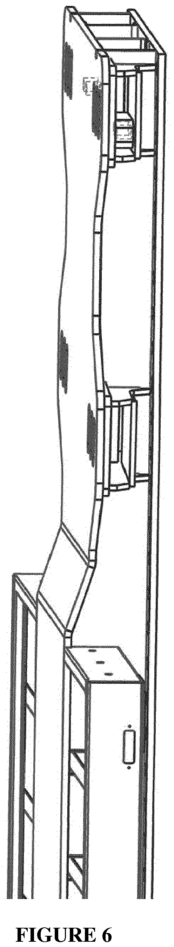

According to a preferred embodiment of the first aspect according to the present invention, said cross-section is substantially rectangular and the at least one box element has four longitudinal sides representing the top, bottom and two side walls of the box element, said longitudinal sides consisting of a substantially rectangular bottom plate having a width corresponding to a longer side of said rectangular cross-section, said two substantially identical side walls, which are two of said at least two longitudinal plates, each having a width corresponding to a shorter side of said rectangular cross-section, one straight longitudinal edge and a longitudinal edge with a profile which varies along the length of the side and a fourth longitudinal side having a width corresponding to a longer side of said rectangular cross-section which closes the longitudinal space between each of the edges of the side walls with said profile, wherein at least 90%, preferably at least 95%, of said profile of said side walls consists of edges parallel to the straight longitudinal edge thereof and the transitions between the edges parallel to the straight longitudinal edge have an angle greater than 90°, said auxiliary frame preferably having one or more transverse plates. An example of such an embodiment is shown in Figure 5, which shows a central box section [1], in which the rectangular cross-section has dimensions which vary along the longitudinal axis thereof and also shows one end element [5] affixed to each of the side sections [2, 2']. Figure 6, is a close-up of Figure 5 showing the variation in the vertical dimension of the box element along the longitudinal axis. This provides flexibility in accommodating cranes with different heights.

According to another preferred embodiment of the first aspect according to the present invention, said cross-section is substantially rectangular and the at least one box element has four longitudinal sides representing the top, bottom and two side walls of the box element, said longitudinal sides consisting of substantially identical top and bottom plates each edge thereof having substantially identical profiles consisting of straight edges substantially parallel to one another with transitions between said straight edges having an angle with respect to said straight edge greater than 90° and wherein at least 90%, preferably at least 95%, of said edge profiles are parallel to one another; and substantially identical sides walls with a constant width close the longitudinal spaces substantially perpendicular to said bottom plate between the edges of the top and bottom plates, said auxiliary frame preferably having one or more transverse plates. Such embodiments are useful in the case of utility chassis with torsionally flexible ladder frames composed of C-shaped or U-shaped frame longitudinal beams with horizontally offset profiles or profiles with multiple offsets, to give a chassis which is wider at the front of the vehicle (e.g. 940 mm wide) and smaller at the rear e.g. 770 mm for Scania vehicles and 762 mm for MAN vehicles.

According to another preferred embodiment of the first aspect according to the present invention, said cross-section is substantially rectangular and the at least one box element has four longitudinal sides representing the top, bottom and two side walls of the box element, said longitudinal sides consisting of a bottom plate having a substantially symmetrical profile consisting of straight edges substantially parallel to one another with transitions between said straight edges having an angle with respect to said straight edge greater than 90° and wherein at least 90%, preferably at least 95%, of said edge profiles are parallel to one another; two substantially identical longitudinal plates substantially perpendicular to said bottom plate following these edge profiles in a horizontal sense, whereas the longitudinal edge remote from said bottom plate has a profile which varies along the length of the side wall, wherein at least 90%, preferably at least 95%, of said profile of said side walls consists of edges parallel to the straight longitudinal edge thereof and the transitions between the edges parallel to the straight longitudinal edge have an angle greater than 90°, with the fourth (top) plate closing the space between each of the edges of the side walls remote from said bottom plate, said auxiliary frame preferably having one or more transverse plates.

The at least one box element comprises at least two longitudinal plates with said longitudinal plates having dedicated holes for said transverse members [3], two of which are the sides plates of the box element and may comprise one or more transverse plates, two of which may be end plates. Hence, the at least one box element may comprise longitudinal plates, which are not side walls. Moreover, if said at least one box element comprises one or more transverse plates, they may or may not be end plates. Longitudinal plates additional to the sides plates of the at least one box element and transverse plates serve to reinforce the box element.

Each of the at least one box element comprises at least two longitudinal plates each having dedicated holes for said transverse members [3]. A long hollow object, which may, for example, be circular or rectangular, capable of accommodating a transverse member [3] may be provided between the dedicated holes. This has the advantage of protecting the box element from harmful contamination introduced with the transverse member [3].

The at least two longitudinal plates of the at least one box element of the central box section [1] of the auxiliary frame of the first aspect of the present invention may be flat plates, parts of a U-type profile, box sections or triangular strengthening elements, with plates, parts of a U-type profile and box sections being preferred and plates and parts of a U-type profile being particularly preferred. Longitudinal plates are preferred in which the dedicated holes can be produced without encountering non-orthogonal elements during the hole-making process, whether the holes are made in the longitudinal plates before or after the affixing process.

The at least one box element of the central box section [1] of the auxiliary frame of the first aspect of the present invention may be produced by any known method using any known affixing process e.g. affixing a bottom plate, two side walls and a top plate together or affixing a U-type profile to a flat plate. The affixing process may be screwing, bolting, welding, sintering, riveting or gluing, or a combination of any of these processes. If the affixing process is welding, the welding may be performed manually or using robot-welders.

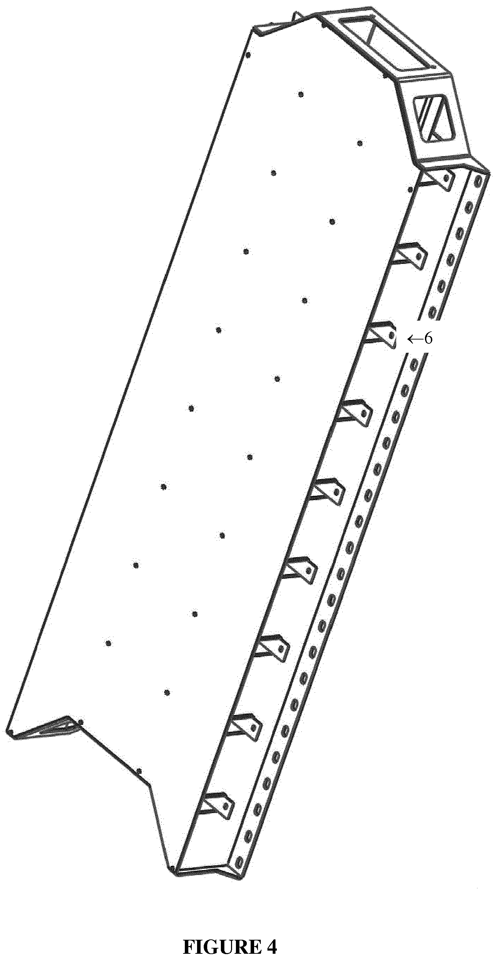

The central box section [1] of the auxiliary frame, according to the present invention, may be produced modularly, as shown in Figure 4, the modules being later permanently affixed to one another.

Typical dimensions of the central box sections [1] of the auxiliary frames, according to the first aspect of the present invention, are a width of 850 mm and a height of 230 mm.

Determining factors in the choice of central box section [1] configuration are the bending strength of the auxiliary frame, the material used, the admissible height (which is a legal requirement regarding the height of the truck chassis, the height of the crane and the height of the load to be carried), torsional rigidity and the weight thereof. If the shape, material and dimensions of the auxiliary frame and the shape, material and dimensions of the truck chassis are provided, the bending strength can be determined using commercially available "Trailer-Win" software (see www.trailerwin.com), available in Belgium from EDS Truck & Trailer Consulting bvba, Steenweg 252, B-9473 Welle-Denderleeuw. This software enables the calculation of the distribution of the weight on the axles, the stability in the case a crane is mounted taking into account additional support legs when needed, the strength of the combination chassis-auxiliary frame and the curve that a truck makes when it turns. For the calculation of the stability, the Trailer-Win software regards the vehicle as being infinitely stiff. Therefore, the user of the programme has to take a 40% safety margin into account.

The torsional stiffness can be calculated using programs such as "Abaqus" from Dassault Systèmes Simulia Corp. or "Promechanica" from PTC, which use finite elements modelling.

Torsional rigidity upon applying a torsional moment of 28 tm to one side of the auxiliary frame for a 870 mm wide, 215 mm high (208 mm for configuration 1-1) and 6 m long auxiliary frame for various configurations together with the weight/m of these configurations are compared in Table 1 below:

**Table 1:**

| Configuration | | Maximum deformation [mm] | Weight [kg/m] |
|---|---|---|---|
| 1-1 (Fig. 7) | Closed rectangular box formed by sandwiching two profiles of 200xl00x 5 mm³ between two plates of thickness 4 mm with 6 transverse elements with a profile of 200x100x5 mm³ symmetrically placed inside said box spaced 900 mm apart | 43 | 115 |
| 1-2 (Fig. 8) | Closed rectangular box with a profile of 870x215x5 mm³ with two central internally placed longitudinal plates 300 mm apart of thickness 3 mm and 20 internally placed transverse plates of thickness 3 mm equally spaced and 300 mm apart | 32 | 108 |
| 1-3 (Fig. 9) | Closed rectangular box with a profile of 870x215x5 mm³ with two central internally placed longitudinal plates 300 mm apart of thickness 3 mm and 20 internally placed transverse plates of thickness 3 mm equally spaced and 300 mm apart, the longitudinal sides of the box and the two internally placed longitudinal plates each having 20 holes, each hole being 100 mm high, 50 mm wide, 300 mm apart and being adjacent to a horizontal longitudinal plate and one of said 20 internally placed transverse plates. Transverse L-shaped profiles of thickness 3 mm pass through the holes and protrude beyond each longitudinal side of the box, with one of the extremities of each of these L-shaped profiles touching the longitudinal horizontal plate and the other extremity touching one of said 20 internally placed transverse plates. | 35 | 116.5 |
| 1-4 (Fig. 10) | a closed section with a 5 mm thick upper closing plate which is a U-shaped bent plate, the section being closed by three additional plates, two bent plates which act as inner reinforcements and a straight closing plate | 150 | 106 |

A comparison of configurations 1-2 (Fig. 8) and 1-3 (Fig. 9) shows that the introduction of holes and transverse elements in the longitudinal sides of the box sections [1] surprisingly has little impact on the torsional rigidity or incurs a substantial weight penalty. Thereby showing that the auxiliary frame of the present invention has the advantage of increased torsional rigidity over prior art auxiliary frames, such as that of configurations 1-1 (with longitudinal and transverse box section reinforcement) and 1-4 (with non-orthogonal reinforcement) without a substantial weight penalty. Moreover, dedicated holes for transverse elements can be more easily produced in configuration 1-2 with four longitudinal plates than with the box profiles used in configuration 1-1 or the non-orthogonal elements in configuration 1-4,

According to the first aspect of the present invention the central box member is longitudinally mountable on a chassis having two spaced girders extending longitudinally with or without offsets and is provided with coupling plates for a crane.

The vast majority of utility vehicle chassis are designed as torsionally flexible ladder frames composed of C-shaped or U-shaped frame longitudinal beams which may be straight parallel beams e.g. for Mercedes and Volvo vehicles or horizontally offset profiles, sometimes even profiles with multiple offsets, to give a chassis which is wider at the front of the vehicle (e.g. 940 mm wide) and smaller at the rear e.g. 770 mm for Scania vehicles and 762 mm for MAN vehicles. The box section [1] of the auxiliary frames according to the first aspect of the present invention with standardized dimensions (e.g. 870 mm wide and 200-250 mm high) can be fitted both to utility vehicles with a chassis with straight parallel beams and with a chassis with multiple offsets by the use of fixation means e.g. fixation plates or fixation clamps.

### Side sections

The simplest embodiment of the side sections, according to the first embodiment of the present invention, are longitudinal flat elements each of which is affixed to one end of the plurality of transverse members, the longitudinal flat elements being preferably substantially perpendicular to the bottom plate of the substantially rectangular central box section. However, side sections, according to the first aspect of the present invention, can have other forms which incorporate a longitudinal flat element, for example be L-shaped or U-shaped, and can also incorporate other features, for example end elements and flooring. Alternatively such features can be affixed to the longitudinal flat elements of the simplest embodiment of the side sections or to other embodiments of the side sections not incorporating such features.

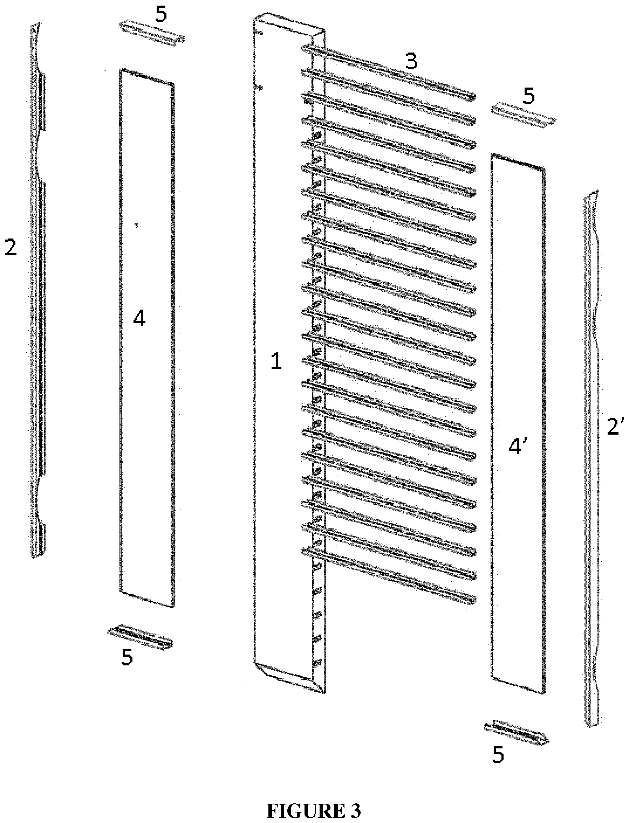

Figure 3 shows a central box section [1] with dedicated holes in the at least two longitudinal plates thereof, the side sections [2, 2'] adapted to accommodate the wheels of a motor vehicle and a plurality of transverse members [3] and with flooring [4, 4'] either side of the central box section [1] and above the transverse members [3] and four end elements [5]. The end elements [5] may be separate from, but affixable to, the side sections or the side sections may comprise at least one end element [5]], for example it could be formed from a single plate by bending it. The end elements [5] close the space between the side section [2, 2'] and the central box section [1] and may comprise a plate as shown in Figure 1 and 3, which may itself be part of a more complicated structure, for example a rectangular profile as shown in Figure 1.

The flooring [4, 4'] may be separate from, but affixable to, the side sections [2, 2'] or the side sections may comprise the flooring [4, 4'], for example it could be formed from a single plate by bending it.

According to another preferred embodiment of the first aspect of the present invention, said side sections [2, 2'] are adapted to accommodate the wheels of a motor vehicle.

According to another preferred embodiment of the first aspect of the present invention, at least one side section [2, 2'] comprises at least one end element [5] i.e. for at least one side section [2, 2'] at least one end element [5] is an integral part thereof with flooring preferably affixed thereto.

According to another preferred embodiment of the first aspect of the present invention, at least one side section [2, 2'] comprises flooring [4, 4'] i.e. for at least one side section [2, 2'] flooring is an integral part thereof.

According to another preferred embodiment of the first aspect of the present invention, at least one side section [2, 2'] comprises at least one end element [5] and flooring [4, 4'] i.e. for at least one side section [2, 2'] at least one end element [5] and flooring are integral parts thereof.

According to another preferred embodiment of the first aspect of the present invention, at least one side section [2, 2'] is affixed to at least one end element [5], with flooring preferably affixed to the side section.

According to another preferred embodiment of the first aspect according to the present invention, flooring is affixed to at least one side section [2, 2'].

### Transverse members

The transverse members may [3] have any profile, which may be open or closed, and are accommodated in the dedicated holes provided in the longitudinal plates of the central box section [1]. The side sections (2,2') are affixed to the transverse members, for example with bolts or rivets.

The transverse members [3] may also be affixed to the central box section [1], for example by bolting to lugs [6] on the central box section [1] as shown in Figure 4.

The spacing of the transverse members [3] should be sufficient to support the flooring adequately.

According to another preferred embodiment of the first aspect of the present invention, said plurality of transverse members [3] is substantially equally spaced.

According to another preferred embodiment of the first aspect of the present invention, said plurality of transverse members [3] have an open profile, for example an "L" profile.

According to another preferred embodiment of the first aspect of the present invention, said plurality of transverse members [3] have a closed profile, for example a cylindrical or box profile.

According to another preferred embodiment of the first aspect of the present invention, said plurality of transverse members [3] have a box profile.

According to another preferred embodiment of the first aspect of the present invention, the flooring [4, 4'] is affixed to the transverse members [3].

### Mounting for crane

Any method known to the skilled person may be used for mounting a crane on the auxiliary frame of the present invention e.g. as disclosed in EP 2085295A.

### Use of the auxiliary frame

According to a preferred embodiment of the fourth aspect of the present invention, the crane is mounted on a motor vehicle.

According to another preferred embodiment of the fourth aspect of the present invention, the crane is mounted on a wagon, in particular a railway wagon.
It is to be understood that although preferred embodiments, specific constructions and configurations, as well as materials, have been discussed herein for devices according to the present invention, various changes or modifications in form and detail may be made without departing from the scope of this invention, as defined by the claims. Steps may be added or deleted to methods described within the scope of the present invention.

## Claims

1. An auxiliary frame for a motor vehicle having a chassis with two spaced girders extending longitudinally with or without at least one offset, said auxiliary frame comprising a central box section [1], two side sections [2, 2'] and a plurality of transverse members [3],
said central box section [1] comprising four longitudinal sides at least two of which being substantially parallel to one another and having a cross-section with substantially invariable angles perpendicular to the longitudinal axis of said central box section,
said central box section [1] comprising at least one box element affixed to one another if at least two box elements and at least two longitudinal plates, two of which are side walls of said box element, with said at least two longitudinal plates having dedicated holes for said transverse members [3];
said plurality of transverse members [3] passing through said holes and being substantially perpendicular to said longitudinal axis; and
each of said side sections [2, 2'] being affixed to one end of said plurality of transverse members [3],
wherein said central box member is longitudinally mountable on said chassis with fixation means and is provided with coupling plates for a mountable crane.

2. The auxiliary frame according to claim 1, wherein said cross-section is substantially rectangular.

3. The auxiliary frame according to claim 2, said rectangular cross-section having four sides, the shorter sides of which vary in length and the longer sides of which do not vary in length.

4. The auxiliary frame according to claim 2, said rectangular cross-section having four sides, the longer sides of which vary in length and the shorter sides of which do not vary in length.

5. The auxiliary frame according to claim 2, said rectangular cross-section having four sides both the shorter sides of which and the longer sides of which vary in length.

6. The auxiliary frame according to any one of claims 1 to 5, wherein said plurality of transverse members [3] has an open or closed profile.

7. The auxiliary frame according to any one of claims 1 to 6, wherein flooring [4, 4'] is provided above and supported by said plurality of transverse members [3].

8. The auxiliary frame according to claim 7, wherein said flooring [4, 4'] is selected from the group consisting of wood, metal, plastic and rubber.

9. The auxiliary frame according to any one of claims 1 to 8, wherein at least one side section [2, 2'] comprises flooring [4, 4'].

10. The auxiliary frame according to any one of claims 1 to 8, wherein at least one side section [2,2'] comprises at least one end element [5] and flooring [4, 4'].

11. The auxiliary frame according to any one of claims 1 to 8, wherein at least one side section [2, 2'] comprises at least one end element [5] with said flooring preferably affixed to said side section.

12. The auxiliary frame according to any one of claims 1 to 8, wherein at least one end element [5] is affixed to at least one side section [2, 2'].

13. The auxiliary frame according to any one of claims 2, 3 and 6 to 12, wherein said at least one box element has four longitudinal sides representing the top, bottom and two side walls of the box element, said longitudinal sides consisting of a substantially rectangular bottom plate having a width corresponding to a longer side of said rectangular cross-section, two substantially identical side walls, which are two of said at least two longitudinal plates, each having a width corresponding to a shorter side of said rectangular cross-section, one straight longitudinal edge and a longitudinal edge with a profile which varies along the length of the side and a fourth longitudinal side having a width corresponding to a longer side of said rectangular cross-section which closes the longitudinal space between each of the edges of the side walls with said profile, wherein at least 90% of said profile of said side walls consists of edges parallel to the straight longitudinal edge thereof and the transitions between the edges parallel to the straight longitudinal edge have an angle greater than 90°.

14. The auxiliary frame according to any one of claims 1 to 12, wherein said central box section is asymmetrical.

15. A motor vehicle comprising said auxiliary frame according to any one of claims 1 to 14.

16. A method of affixing an auxiliary frame according to any one of claims 1 to 14 to an entity having longitudinal girders, said method comprising the step of fitting fixation means to said longitudinal girders to accommodate said central box section [1]; and affixing said central box section [1] to said fixation means affixed to said longitudinal girders.

17. Use of the auxiliary frame according to any one of claims 1 to 14 for the mounting of a crane.

## Patentansprüche

1. Hilfsrahmen für ein Kraftfahrzeug, das ein Chassis mit zwei beabstandeten Trägern, die sich mit oder ohne mindestens einen Versatz längs erstrecken, aufweist, wobei der Hilfsrahmen einen zentralen Boxabschnitt [1], zwei Seitenabschnitte [2, 2'] und eine Vielzahl an Querelementen [3] aufweist,
wobei der zentrale Boxabschnitt [1] vier Längsseiten aufweist, wobei mindestens zwei dieser im Wesentlichen parallel zueinander verlaufen und einen Querschnitt mit im Wesentlichen gleichbleibenden Winkeln senkrecht zu der Längsachse des zentralen Boxabschnitts aufweisen,
wobei der zentrale Boxabschnitt [1] mindestens ein Boxelement aufweist, wobei, falls es mindestens zwei Boxelemente gibt, die Boxelemente aneinander befestigt sind, und mindestens zwei Längsplatten, wobei es sich bei zwei von diesen um Seitenwände des Boxelements handelt, wobei die mindestens zwei Längsplatten zugehörige Löcher für die Querelemente [3] aufweisen;
wobei die Vielzahl an Querelementen [3] durch die Löcher hindurchgehen und im Wesentlichen senkrecht zu der Längsachse sind; und
wobei jeder der Seitenabschnitte [2, 2'] an einem Ende der Vielzahl an Querelementen [3] befestigt ist,
wobei das zentrale Boxelement längs auf dem Chassis mit einem Befestigungsmittel angebracht werden kann und mit Verbindungsplatten für einen anbringbaren Kran versehen ist.

2. Hilfsrahmen nach Anspruch 1, wobei der Querschnitt im Wesentlichen rechteckig ist.

3. Hilfsrahmen nach Anspruch 2, wobei der rechteckige Querschnitt vier Seiten aufweist, wobei die kürzeren Seiten davon in der Länge variieren und die längeren Seiten davon nicht in der Länge variieren.

4. Hilfsrahmen nach Anspruch 2, wobei der rechteckige Querschnitt vier Seiten aufweist, wobei die längeren Seiten davon in der Länge variieren und die kürzeren Seiten davon nicht in der Länge variieren.

5. Hilfsrahmen nach Anspruch 2, wobei der rechteckige Querschnitt vier Seiten aufweist, wobei sowohl die beiden kürzeren Seiten als auch längeren Seiten in der Länge variieren.

6. Hilfsrahmen nach einem der Ansprüche 1 bis 5, wobei die Vielzahl an Querelementen [3] ein offenes bzw. geschlossenes Profil aufweist.

7. Hilfsrahmen nach einem der Ansprüche 1 bis 6, wobei der Boden [4, 4'] darüber vorgesehen ist und von der Vielzahl an Querelementen [3] getragen wird.

8. Hilfsrahmen nach Anspruch 7, wobei der Boden [4, 4'] aus der Gruppe, die Holz, Metall, Plastik und Gummi aufweist, ausgewählt wird.

9. Hilfsrahmen nach einem der Ansprüche 1 bis 8, wobei mindestens ein Seitenabschnitt [2, 2'] einen Boden [4, 4'] aufweist.

10. Hilfsrahmen nach einem der Ansprüche 1 bis 8, wobei mindestens ein Seitenabschnitt [2, 2'] mindestens ein Endelement [5] und einen Boden [4, 4'] aufweist.

11. Hilfsrahmen nach einem der Ansprüche 1 bis 8, wobei mindestens ein Seitenabschnitt [2, 2'] mindestens ein Endelement [5] aufweist, wobei der Boden bevorzugt an dem Seitenabschnitt befestigt ist.

12. Hilfsrahmen nach einem der Ansprüche 1 bis 8, wobei mindestens ein Endelement [5] an mindestens einem Seitenabschnitt [2, 2'] befestigt ist.

13. Hilfsrahmen nach einem der Ansprüche 2, 3 und 6 bis 12, wobei das mindestens eine Boxelement vier Längsseiten aufweist, die eine Oberseite, Unterseite und zwei Seitenwände des Boxelements darstellen, wobei die Längsseiten eine im Wesentlichen rechteckige Bodenplatte mit einer Breite, die einer längeren Seite des rechteckigen Querschnitts entspricht, zwei im Wesentlichen identische Seitenwände, wobei es sich bei diesen um zwei der mindestens zwei Längsplatten handelt, wobei jede eine Breite aufweist, die einer kürzeren Seite des rechteckigen Querschnitts entspricht, eine gerade Längskante und eine Längskante mit einem Profil, das entlang der Länge der Seite variiert, und eine vierte Längsseite mit einer Breite, die einer längeren Seite des rechteckigen Querschnitts entspricht, die den Längsraum zwischen jeder der Kanten der Seitenwände mit dem Profil schließt, aufweisen, wobei mindestens 90 % der Profile der Seitenwände Kanten aufweisen, die parallel zu der geraden Längskante davon verlaufen, und die Übergänge zwischen den Kanten parallel zu der geraden Längskante einen Winkel von größer als 90° aufweisen.

14. Hilfsrahmen nach einem der Ansprüche 1 bis 12, wobei der zentrale Boxabschnitt asymmetrisch ist.

15. Kraftfahrzeug, das den Hilfsrahmen gemäß einem der Ansprüche 1 bis 14 aufweist.

16. Verfahren zum Befestigen eines Hilfsrahmens gemäß einem der Ansprüche 1 bis 14 an einer Einheit, die Längsträger aufweist, wobei das Verfahren den Schritt des Anbringens eines Befestigungsmittels an den Längsträgern, um einen zentralen Boxabschnitt [1] aufzunehmen; und des Befestigens des zentralen Boxabschnitts [1] an dem Befestigungsmittel, das an den Längsträgern befestigt ist, aufweist.

17. Verwendung des Hilfsrahmens gemäß einem der Ansprüche 1 bis 14 zum Anbringen eines Krans.

## Revendications

1. Cadre auxiliaire pour un véhicule automobile ayant un châssis avec deux traverses espacées s'étendant de façon longitudinale sans ou avec au moins un décalage, ledit cadre auxiliaire comprenant une section de boîte centrale [1], deux sections latérales [2, 2'] et une pluralité d'éléments transversaux [3],
ladite section de boîte centrale [1] comprenant quatre côtés longitudinaux dont au moins deux sont sensiblement parallèles l'un à l'autre et ayant une section transversale avec des angles sensiblement invariables perpendiculaires à l'axe longitudinal de ladite section de boîte centrale,
ladite section de boîte centrale [1] comprenant au moins un élément de boîte fixé à un autre si au moins deux éléments de boîte et au moins deux plaques longitudinales, dont deux sont des parois latérales dudit élément de boîte, lesdites au moins deux plaques longitudinales ayant des trous dédiés pour lesdits éléments transversaux [3] ;
ladite pluralité d'éléments transversaux [3] passant à travers lesdits trous et étant sensiblement perpendiculaire audit axe longitudinal ; et
chacune desdites sections latérales [2, 2'] étant fixée à une extrémité particulière de ladite pluralité d'éléments transversaux [3],
dans lequel ledit élément de boîte centrale peut être monté de façon longitudinale sur ledit châssis avec un moyen de fixation et est muni de plaques d'accouplement pour une grue pouvant être montée.

2. Cadre auxiliaire selon la revendication 1, dans lequel ladite section transversale est sensiblement rectangulaire.

3. Cadre auxiliaire selon la revendication 2, ladite section transversale rectangulaire ayant quatre côtés, dont les côtés plus courts varient dans la longueur et dont les côtés plus longs ne varient pas dans la longueur.

4. Cadre auxiliaire selon la revendication 2, ladite section transversale rectangulaire ayant quatre côtés, dont les côtés plus longs varient dans la longueur et dont les côtés plus courts ne varient pas dans la longueur.

5. Cadre auxiliaire selon la revendication 2, ladite section transversale rectangulaire ayant quatre côtés dont tant les côtés plus courts que les côtés plus longs varient dans la longueur.

6. Cadre auxiliaire selon l'une quelconque des revendications 1 à 5, dans lequel ladite pluralité d'éléments transversaux [3] a un profil ouvert ou fermé.

7. Cadre auxiliaire selon l'une quelconque des revendications 1 à 6, dans lequel un revêtement de sol [4, 4'] est prévu au-dessus et est supporté par ladite pluralité d'éléments transversaux [3].

8. Cadre auxiliaire selon la revendication 7, dans lequel ledit revêtement [4, 4'] est sélectionné à partir du groupe constitué par le bois, le métal, le plastique et le caoutchouc.

9. Cadre auxiliaire selon l'une quelconque des revendications 1 à 8, dans lequel au moins une section latérale [2, 2'] comprend le revêtement de sol [4, 4'].

10. Cadre auxiliaire selon l'une quelconque des revendications 1 à 8, dans lequel au moins une section latérale [2, 2'] comprend au moins un élément d'extrémité [5] et le revêtement de sol [4, 4'].

11. Cadre auxiliaire selon l'une quelconque des revendications 1 à 8, dans lequel au moins une section latérale [2, 2'] comprend au moins un élément d'extrémité [5], ledit revêtement de sol étant de préférence fixé à ladite section latérale.

12. Cadre auxiliaire selon l'une quelconque des revendications 1 à 8, dans lequel au moins un élément d'extrémité [5] est fixé à au moins une section latérale [2, 2'].

13. Cadre auxiliaire selon l'une quelconque des revendications 2, 3 et 6 à 12, dans lequel ledit au moins un élément de boîte a quatre côtés longitudinaux représentant le dessus, le fond et deux parois latérales de l'élément de boîte, lesdits côtés longitudinaux consistant en une plaque de fond sensiblement rectangulaire ayant une largeur correspondant à un côté plus long de ladite section transversale rectangulaire, deux parois latérales sensiblement identiques, qui sont deux desdites au moins deux plaques longitudinales, chacune ayant une largeur correspondant à un côté plus court de ladite section transversale rectangulaire, un bord longitudinal droit et un bord longitudinal avec un profil qui varie le long de la longueur du côté et un quatrième côté longitudinal ayant une largeur correspondant à un côté plus long de ladite section transversale rectangulaire qui ferme l'espace longitudinal entre chacun des bords des parois latérales avec ledit profil, dans lequel au moins 90 % dudit profil desdites parois latérales consistent en bords parallèles au bord longitudinal droit de celui-ci et les transitions entre les bords parallèles au bord longitudinal droit ont un angle supérieur à 90°.

14. Cadre auxiliaire selon l'une quelconque des revendications 1 à 12, dans lequel ladite section de boîte centrale est asymétrique.

15. Véhicule automobile comprenant ledit cadre auxiliaire selon l'une quelconque des revendications 1 à 14.

16. Procédé de fixation d'un cadre auxiliaire selon n'importe laquelle des revendications 1 à 14 à une entité ayant des traverses longitudinales, ledit procédé comprenant l'étape consistant à ajuster un moyen de fixation auxdites traverses longitudinales pour loger ladite section de boîte centrale [1] ; et à fixer ladite section de boîte centrale [1] audit moyen de fixation fixé auxdites traverses longitudinales.

17. Utilisation du cadre auxiliaire selon l'une quelconque des revendications 1 à 14 pour le montage d'une grue.
